# EUROPEAN PATENT APPLICATION

(11) **EP 1 039 741 A2**
(43) Date of publication of application: **27.09.2000**
(21) Application number: 00200861.3
(22) Date of filing: 10.03.2000
(51) Int. Cl.: H04N 1/44

(54) **Health care system using data authentication**

(30) Priority: 22.03.1999 US 273863
(71) Applicant: EASTMAN KODAK COMPANY, Rochester, New York 14650 (US)
(72) Inventor: Modney, David L., Eastman Kodak Company, Rochester, New York 14650-2201 (US)
(74) Representative: Lewandowsky, Klaus, Dipl.-Ing.

(57) **Abstract**

A medical data authentification system comprising: a medical data acquisition apparatus for acquiring digital medical data of a patient at a patient station; an unalterable, factory pre-set, authentification device for providing unalterable time and date data simultaneously with the acquisition of the digital medical data; an encryptor for encrypting the unalterable time and date data and for associating the encrypted data with the digital medical data; and an interface for sending the digital medical data and the associated encrypted data over a communication channel.

## Description

### FIELD OF THE INVENTION

This invention relates in general to health care systems and relates more particularly to a health care system in which video images and physiological data of a patient are digitally transmitted with authentication from a patient's video phone to a remote video phone of a health care provider over a public telecommunication network (telephone system).

### BACKGROUND OF THE INVENTION

There exists a need for a health care system in which both images and physiological data of a patient can be examined by a health care provider (doctor, nurse) at a remote location. The relentless pressure to reduce costs in the health care industry requires more efficient use of a health care professional's services. Although office visits are typical, many patients are either too ill, disabled, or too remote from a health care professional's office to be able to avail oneself of an office visit. As a result, health care systems have been proposed that allow transmission of physiological data of a patient at home or other facility to a health care professional at a remote locate over a public telecommunication network, such as the public telephone system.

A problem arises as to the authenticity of digital medical data since digital data can be easily copied and altered.

U.S. Patent 5,579,393, issued November 26, 1996, inventors Conner et al. discloses a system and method for secure medical and dental record interchange. The system disclosed is disadvantageous due to undue complexity and high equipment cost.

### SUMMARY OF THE INVENTION

According to the present invention, there is provided a solution to these problems.

According to a feature of the present invention, there is provided a medical data authentification system comprising: a medical data acquisition apparatus for acquiring digital medical data of a patient at a patient station; an unalterable, factory pre-set, authentification device for providing unalterable time and date data simultaneously with the acquisition of the digital medical data; an encryptor for encrypting the unalterable time and date data and for associating the encrypted data with the digital medical data; and an interface for sending the digital medical data and the associated encrypted data over a communication channel.

### ADVANTAGEOUS EFFECT OF THE INVENTION

The invention has the following advantages.
1. Physiological data of a patient are transmitted digitally over a public telecommunication network, minimizing degradation and corruption of the data. The time and date of the creation of the data are provided by an unalterable authentification device and the data is encrypted and associated with the physiological data.
2. Visual images of the patient are digitally transmitted simultaneously with the physiological data, thus enhancing communication between patient and health care provider, and optimizing proper diagnosis. The time and date of the creation of the visual image are provided by an unalterable authentification device and the data is encrypted and associated with the visual image data.
3. The authentication system is tamper proof and cost effective.

### BRIEF DESCRIPTION OF THE DRAWINGS

Fig. 1 is a block diagram of a health care system according to the present invention.
Fig. 2 is a block diagram of a patient's station of the system of Fig. 1.
Fig. 3 is a block diagram of a preferred stethoscope sound processing circuit.
Fig. 4 is a block diagram of a health care provider's station of the system of Fig. 1.
Fig. 5 is a block diagram of an authentification device.
Fig. 6 is a diagrammatic view of the JPEG data format.

### DETAILED DESCRIPTION OF THE INVENTION

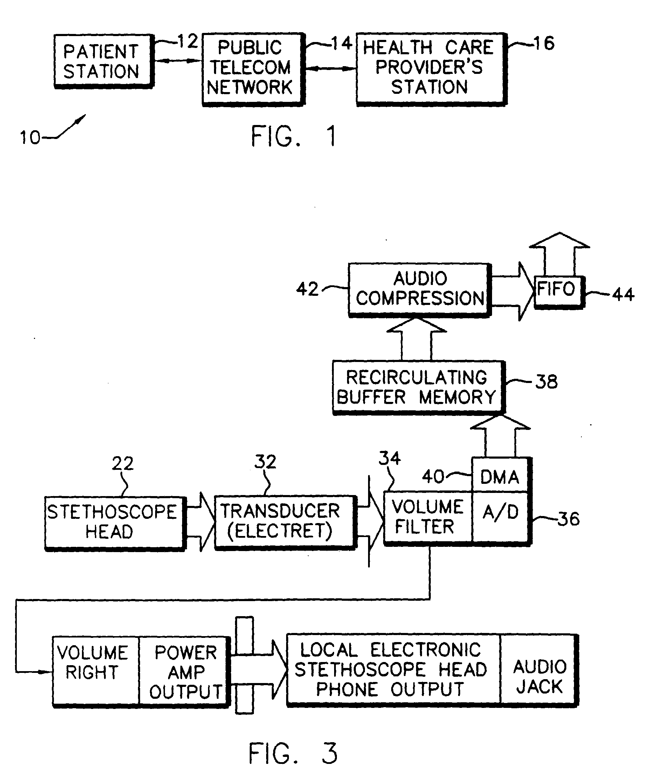

Referring now to the figures, there is shown a preferred embodiment of the present invention. Fig. 1 is a block diagram of the main components of a health care system of the invention. As shown, health care system 10 includes a patient station 12, a health care provider's station 16, and a public telecommunication network 14 connecting stations 12 and 16. Network 14 can, for example, be the public telephone network, cellular phone network, ISDN, Ethernet, Intranet, Internet, or any other network capable of transmitting digital signals between stations 12 and 16.

In general, each of stations 12 and 16, is provided with a videophone which is connected to network 14. The patient station is located at a patient's venue, such as, the patient's home. It can also be located in a business, a health care facility, or the like. The health care provider's station is located at the provider's venue, such as a doctor's or nurse's office, a hospital, or the like. As will be described in more detail later, the patient's station includes a stethoscope which is used by the patient to produce physiological sounds of the patient. The physiological sounds relate to the cardiovascular, respiratory, and other systems of the patient. The sounds are digitized and transmitted by station 12 over network 14 to station 16, where they are reproduced and examined by the health care provider. Images of the patient are simultaneously transmitted over network 14 to enhance the examination and diagnosis of the patient.

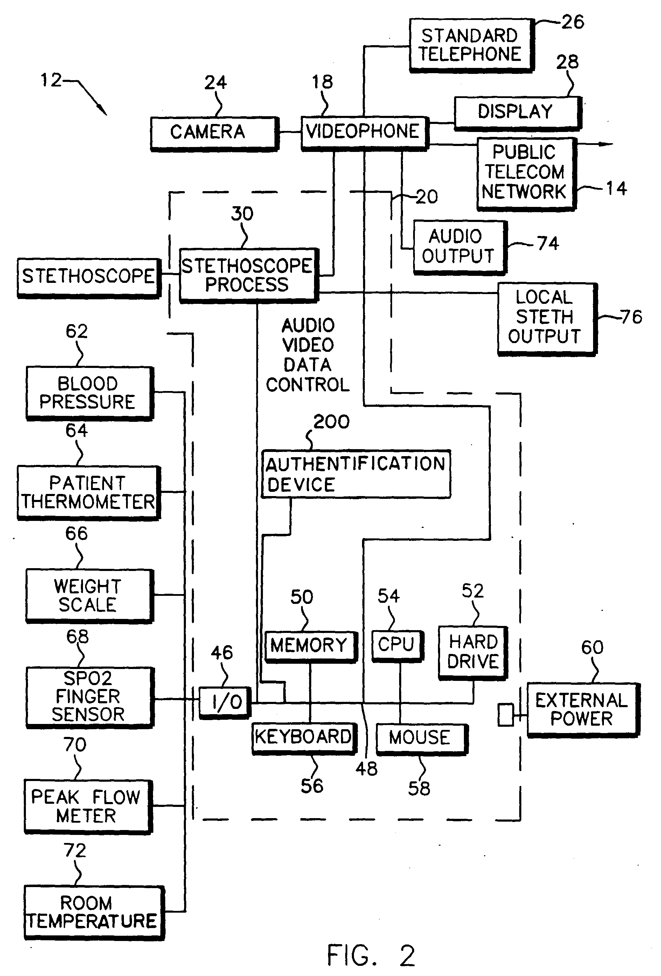

Referring now to Fig. 2, there will be described a preferred embodiment of patient station 12. As shown, station 12 includes a first videophone 18, a processor 20, and a stethoscope 22. Videophone 18 is a standard videophone which sends and receives audio and video as digital data over a standard public telephone network 14, or the like. Coupled to videophone 18 are camera 24 for capturing images of a patient, a standard telephone 26, and a video display 28 for displaying images, graphics and data. Processor 20 includes a stethoscope processing circuit 30 for converting patient physiological sounds picked up by stethoscope 22 into compressed digital data transmitted by videophone 18 over network 14 to station 16.

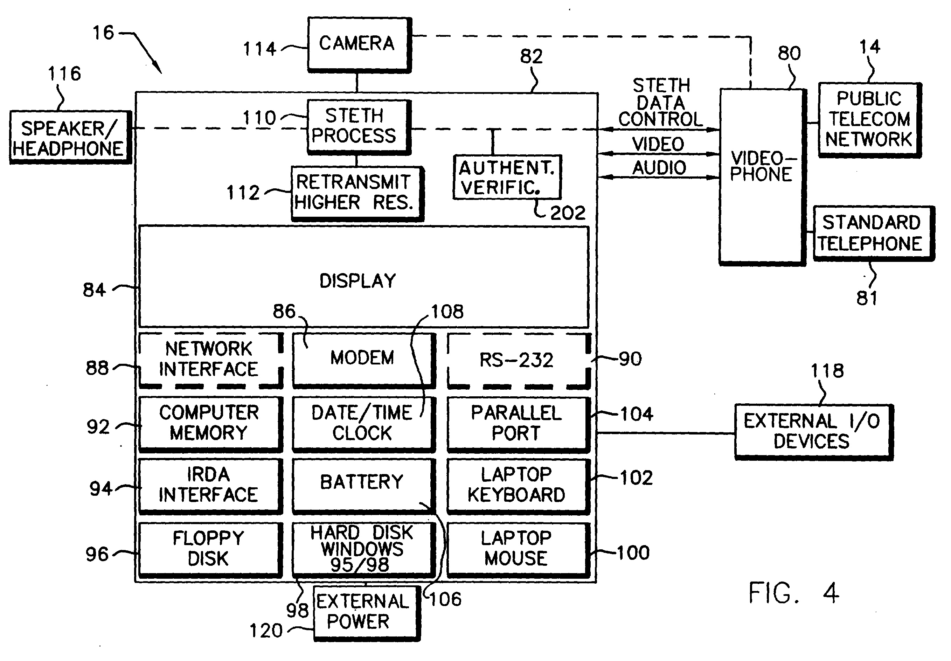

As shown in greater detail in Fig. 3, stethoscope processing circuit 30 includes a transducer 32 for converting the physiological sounds into analog signals, a volume and filter section 34, an analog to digital converter 36 for converting the analog signals to digital data, and a recirculating buffer memory 38 controlled by direct memory access controller (DMA) 40. Buffer memory 38 stores many seconds of the raw high quality digital physiological sounds data. The digital data is compressed by a tunable loss audio compressor 42 (other known compression techniques can also be used). If the health care provider at station 16 wishes to listen to high quality audio at a later time, the recirculating buffer memory 38 can be accessed from remote station 16 to recompress the digital data at a different loss level (compression ratio) to produce higher quality audio. The new data is retransmitted from station 12 to station 16. The compressed digital data is stored in a first-in-first-out (FIFO) memory 44. The data from memory 44 is sent to a data channel of videophone 18. The data is then transmitted over network 14 to station 16 along with digital images of the patient.

Referring again to Fig. 2, processor 20 also includes an input/output (I/O) 46, bus 48, memory 50, hard drive 52 for storing an operating system, programs, and data, CPU 54, keyboard 56, and mouse 58. Processor 20 can be powered by an internal battery or an external power source 60. Other devices can be connected to processor 20 for transmission of other patient physiological data. These devices include blood pressure device 62, patient thermometer 64, weight scale 66, SpO2 finger sensor 68, peak flow meter 70, and room temperature device 72. The values produced by these devices are digitized by processor 20 and sent by videophone 18 over network 14 in a videophone data channel. Station 12 also includes audio output (speaker) 74 and local stethoscope output 76 (headphones).

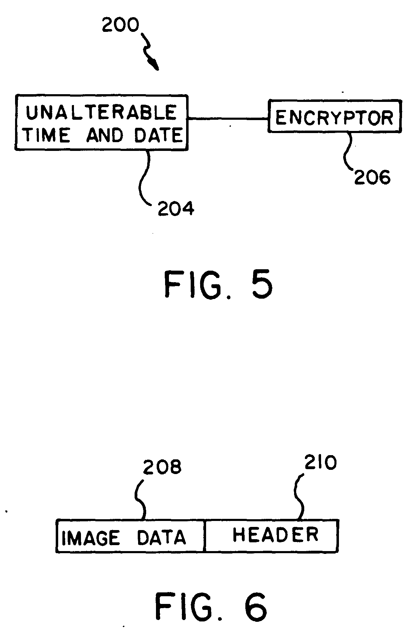

According to the invention, station 12 also includes an authentification device 200. As shown in Fig. 5, device 200 includes apparatus 204 for providing unalterable device 200 includes apparatus 204 for providing unalterable time and date data and encryptor 206. Apparatus 204 includes a time/date clock with a battery, has a minimum ten year operation with no adjustment and is factory set requiring no service. (An exemplary device is available from Dallas Semiconductor.)

Digital images can traditionally be altered via image processing software. The invention provides a technique to store, retrieve, and verify the integrity of a digital image. The image is a conventional JPEG format, which includes within the image data set, the ability to verify the integrity of the image data. One application of this technique is the verification of the integrity of medical images. Included in this technique is the ability to unalterably time, date, and document the conditions under which the image was acquired. The time, date, unique serial number, and encryption key information shall be originated from a unalterable factory preset battery operated time, date module and nonvolatile memory (apparatus 204). One goal is to produce a conventional image storage format that allows the transmission, storage, viewing, and printing via standard imaging software and with the same data set, allows the verification of the image data set via special software routines.

As shown in Fig. 6, a conventional JPEG image storage format includes the digital image data set 208 and a header data area 210. The header contains a comment section that can store additional digital data. The comment section can contain conventional ASCII text, images, encrypted information, and other data. The digital image data set can be verified for data integrity via a checksum technique. The comments section can contain both a conventional encrypted and nonencrypted verification data. The comments section can be subdivided into sections that contain the checksum for the image data, header data minus comments checksum, and a section to verify the contents of the checksum area. An additional image can be stored in the comments section. Using special software, this second image can be displayed.

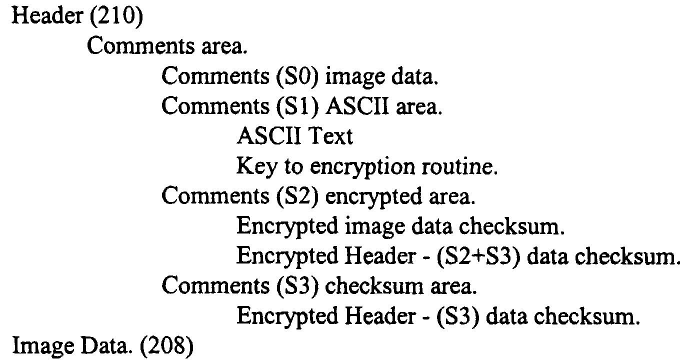

The comments area can include time, data, name, address, telephone number, location, and other data. At the time of encoding of the image data, the comments section can be populated with information such as the storage and transmission status of the image. The image acquisition system can therefore document the image transmission status (i.e. image acquired during connection via transmission channel) before encryption and package the image data file before transmission via communication channel and identify such:

Referring now to Fig. 4, there is shown in greater detail station 16. As shown, station 16 includes a second videophone 80 connected to network 14. Videophone 80 is connected to a standard telephone 81 and to a laptop type computer 82 by audio, video, and data/control links. Computer 82 includes display 84, modem 86, optional network interface 88, optional RS-232 interface 90, computer memory 92, IRDA interface 94, floppy disk drive 96, hard disk drive 98, laptop mouse 100, laptop keyboard 102, parallel port 104, battery 106, date/time clock 108, steth processor 110, retransmit higher resolution command control 112. Connected to computer 82 is a camera 114 (which can also be connected to video phone 80), sound reproducer (speaker, headphones) 116, external I/O devices 118 (external mouse, external keyboard, external RS-232 link, external printer), and external power 120. Units 80 and 82 can be housed in the same case or be housed in separate but connected cases. Computer 82 can include a videophone system which would eliminate the need for a separate videophone 80.

The digital image(s) and digital stethoscope data are received in the data channel of second videophone 80. The digital stethoscope data is sent to steth processor 110 of computer 82 (one example is as follows: video phone data channel is sent to a IIC serial output port, the IIC serial data is convened to a RS-232 serial stream of data, the RS-232 serial stream of data is sent to a RS-232 port of computer 82, and stored in memory 92, the memory is read into steth processor 110. Steth processor 110 converts the digital stethoscope sound data to analog data by a digital-to-analog converter. The analog signal is amplified, sent to a power amplifier and then to sound reproducer 116 for the health care provider to hear the stethoscope sounds). The digital images are converted and displayed on display 84.

According to the invention, station 16 includes authentication verification system 202 which deencrypts the encrypted data and verifies its authenticity.

If a user desires a higher quality audio sound, the user will actuate control 112 to send a command to the data channel of second videophone 80. The first videophone 18 will receive the command over the data channel from videophone 80, adjust the loss ratio of compressor 42 (Fig. 3), recompress the stethoscope sound data in buffer memory 38 to a higher quality sound data and retransmit the stethoscope sound data from videophone 18 to videophone 80 over network 14. The user at station 16 hears the higher quality stethoscope sounds by sound reproducer 116.

The invention has been described in detail with particular reference to certain preferred embodiments thereof, but it will be understood that variations and modifications can be effected within the spirit and scope of the invention.

### PARTS LIST

- 10: health care system
- 12: patient station
- 14: public telecommunication network
- 16: health care provider's station
- 18: first videophone
- 20: processor
- 22: stethoscope
- 24: camera
- 26: standard telephone
- 28: video display
- 30: stethoscope processing circuit
- 32: transducer
- 34: volume and filter section
- 36: analog to digital converter
- 38: recirculating buffer memory
- 40: direct memory access controller (DMA)
- 42: tunable loss audio compressor
- 44: first-in-first-out (FIFO) memory
- 46: input/output (I/O)
- 48: bus
- 50: memory
- 52: hard drive
- 54: CPU
- 56: keyboard
- 58: mouse
- 60: external power source
- 62: blood pressure device
- 64: patient thermometer
- 66: weight scale
- 68: finger sensor
- 70: peak flow meter
- 72: room temperature device
- 74: audio output (speaker)
- 76: local stethoscope output
- 80: second videophone
- 81: standard telephone
- 82: laptop type computer
- 84: display
- 86: modem
- 88: optional network interface
- 90: optional RS-232 interface 90
- 92: computer memory
- 94: IRDA interface
- 96: floppy disk drive
- 98: hard disk drive
- 100: laptop mouse
- 102: laptop keyboard
- 104: parallel port
- 106: battery
- 108: date/time clock
- 110: steth processor
- 112: retransmit higher resolution command control
- 114: camera
- 116: sound reproducer
- 118: external I/O devices
- 120: external power
- 200: authentification device
- 202: authentication verification system
- 204: apparatus
- 206: encryptor
- 208: digital image data set
- 210: header data area

## Claims

1. A medical data authentification system comprising:
a medical data acquisition apparatus for acquiring digital medical data of a patient at a patient station;
an unalterable, factory pre-set, authentification device for providing unalterable time and date data simultaneously with the acquisition of said digital medical data;
an encryptor for encrypting said unalterable time and date data and for associating said encrypted data with said digital medical data; and
an interface for sending said digital medical data and said associated encrypted data over a communication channel.

2. The system of claim 1 wherein said medical data acquisition apparatus includes an image acquisition apparatus for acquiring an image of said patient.

3. The system of claim 1 wherein said medical data acquisition apparatus includes a stethoscope for acquiring physiological sounds from said patient.

4. The system of claim 1 wherein said medical data acquisition apparatus includes an image acquisition apparatus and a stethoscope for simultaneously acquiring an image of and physiological sounds from said patient, respectively.

5. The system of claim 1 wherein said authentification device also provides a unique identifier and encryption key information.

6. The system of claim 2 wherein said acquired digital medical data is in a JPEG format including an image data file and a header which includes said encrypted data.

7. The system of claim 1 including a health care provider's station for receiving said digital medical data and said associated encrypted data over said communication channel, said health care provider's station including a second authentification device for deencrypting said received encrypted data and for authenticating said received medical image data.
